# EUROPEAN PATENT SPECIFICATION

(11) **EP 1 971 787 B1**
(45) Date of publication and mention of the grant of the patent: **22.05.2013**
(21) Application number: 07709781.4
(22) Date of filing: 12.01.2007
(51) Int. Cl.: F16B 39/36, F16B 31/00, F16B 37/08, B25B 29/02, F16B 31/04

(54) **SELF LOCKING TENSIONER**
SPANNER MIT SELBSTSPERRE
TENDEUR A AUTO-VERROUILLAGE

(30) Priority: 13.01.2006 US 332439
(43) Date of publication of application: 24.09.2008
(73) Proprietor: OCEANEERING INTERNATIONAL, INC., Houston, TX 77041 (US)
(72) Inventor: MYNHIER, Charles, Robert, Magnolia, TX 77355 (US); TYRRELL, Charles, Houston, TX 77079 (US)
(74) Representative: Manley, Nicholas Michael
(86) International application number: PCT/US2007/000894
(87) International publication number: WO 2007/084398

(56) References cited:
- WO-A1-2004/108360
- DE-A1- 4 341 707
- GB-A- 2 223 075
- US-A- 3 712 574
- US-A- 4 815 360
- US-A- 5 732 909
- US-A- 5 733 084
- US-A- 5 800 108

## Description

### FIELD OF THE INVENTION

The present invention is directed to a self locking tensioner that can be used to place a piston or stud in tension. The present invention is directed to a tensioner comprising slip wedges positioned between a piston and a body which houses the piston and the slip wedges.

### BACKGROUND OF THE INVENTION

Prior art tensioners typically apply hydraulic forces to tension a stud. Prior art hydraulic tensioners typically involve the use of a nut which must be positioned on the stud while hydraulic pressure is applied. In many applications using a remotely operated vehicle ("ROV"), it is inconvenient to use a tensioner which requires simultaneous positioning of the stud and application of hydraulic pressure.

Prior art tensioners comprising hydraulic nuts require an extra operation to hold the stretched stud. For subsea applications where remotely controlled ROV manipulator arms are used to tension such nuts, this extra operation increases the difficulty of using such tensioners.
[0003a] DE 43 41 707 A1 discloses an hydraulic threaded bolt tension device in which cylinder supports a machine part to be clamped by means of a threaded bolt and a nut. A piston supports a threaded bush screwed on a threaded end of the threaded bolt and at least one catchment device is provided. The catchment device comprises a radially inwardly extending projection on the cylinder or on the piston. The projection engages behind the end of the threaded bush facing the machine part and comprises a cone surface extending radially inwards on the cylinder or piston and engages behind a corresponding cone surface at the end of the threaded bush.
[0003b] GB 2 223 075 A discloses a bolt tensioner in which an L-section piston is interposed between a bridge and a puller so as to define a hydraulic cylinder between the arms of the L-section, one arm of the L-section constituting a piston head and the other arm constituting a relatively thin skirt portion which in use is supported by the puller. When the appropriate strain has been developed in the stud, the nut is run down against the hardware. The L-section piston may be made of aluminium alloy or plastics such as carbon-loaded poly ether ketone. Both the piston head and skirt taper and the bridge is divided to form a spherical washer to accommodate misalignment between the stud and hardware.
[0003c] WO2004/108360 discloses a system and method of tensioning a bolt across a flange assembly. A tensioning apparatus includes the bolt and an unthreaded nut connected to the shank member by an interference fit. The interference fit may be selectively relaxed by applying a fluid pressure to a groove between the nut and the bolt. A tensioner is energized by a pressure to pre-load the bolt by pulling on the bolt while pushing on the nut while the interference fit is sufficiently relaxed to allow relative movement between the nut and the bolt. The tensioner is sized to achieve the required pre-load in the bolt at the same working fluid pressure that is necessary to relax the interference fit on the stretched bolt, thus permitting a single pressure source to be used for both functions. Once the pre-load is established, the interference fit is reestablished by releasing pressure to the nut to secure the nut in position for maintaining the closure force across the flange assembly after the tensioner is removed. Because the nut does not need to rotate, the pre-load may be applied directly through the nut without the use of a bridge, thereby eliminating the need for overstressing of the bolt to accommodate seating of the nut once the tensioner is relaxed.

The present invention provides a self locking tensioner, which may be tensioned using hydraulic pressure, and which has greater position setting flexibility than do prior art hydraulic tensioners. In another embodiment, the present invention provides a tensioner comprising a fluid operated nut that will automatically hold whatever position the nut is stretched to without an extra operation, as discussed above.

In one preferred embodiment, the present invention provides for tensioning or detensioning of a piston or stud in whatever increment of tensioning or detensioning is desired. The term "detensioning" as used herein, means movement of a tensioned member to reduce the magnitude of tensile force on the member.

### BRIEF DESCRIPTION OF THE DRAWINGS

Figure 1A is a side cross sectional of a first preferred embodiment of the present invention in the untensioned mode.

Figure 1B is a side cross sectional of a first preferred embodiment of the present invention in the tensioned mode.

Figure 1C is an exploded isometric view of the first preferred embodiment of the present invention.

Figure 2A is a side cross sectional of a second preferred embodiment of the present invention in the untensioned mode.

Figure 2B is a side cross sectional of a second preferred embodiment of the present invention in the tensioned mode.

Figure 2C is an exploded isometric view of the second preferred embodiment of the present invention.

Figure 3A is a side cross sectional of a third preferred embodiment of the present invention in the untensioned mode.

Figure 3B is a side cross sectional view of a third preferred embodiment of the present invention in the tensioned mode.

Figure 3C is an exploded isometric view of the third preferred embodiment of the present invention.

### DETAILED DESCRIPTION OF THE PREFERRED EMBODIMENTS

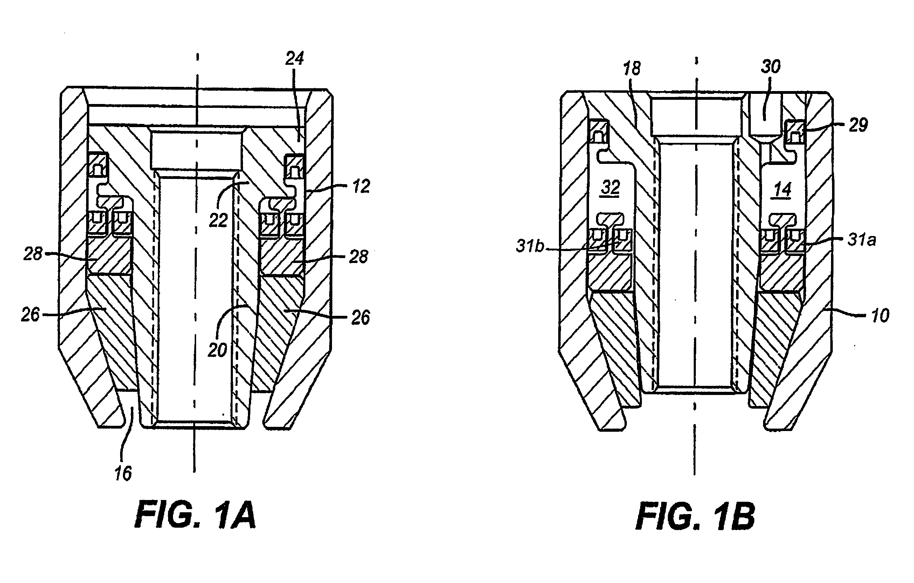

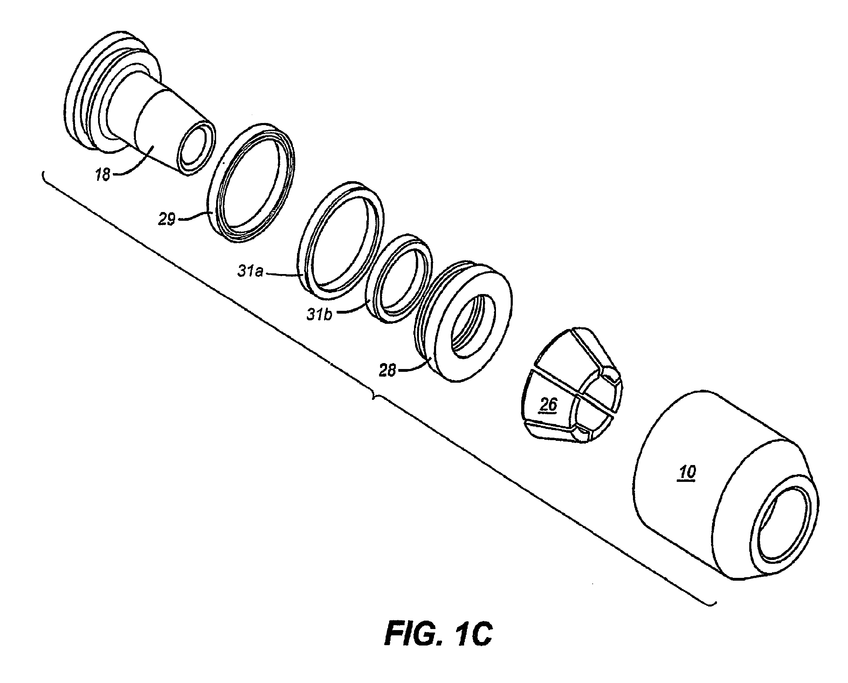

A first preferred embodiment of the present invention is directed toward a tensioner comprising a body **10** comprising a central channel **12** comprising an upper cylindrical section **14** and a lower conical section **16**. This embodiment is depicted in Figures 1A, 1B and 1C. This preferred embodiment further comprises a piston member **18** centrally located in the central channel. The piston member comprises a longitudinal shaft **20** and a top region **22** comprising an upper lip **24**. In a preferred embodiment, the invention further comprises an elastomeric sealing member **29** positioned to form a fluid tight seal between the piston member and the body.

This preferred embodiment further comprises at least two slip wedges **26** extending into the conical section of the central channel adjacent to the piston and a wedge piston 28 mounted above the slip wedges in the central channel. In a preferred embodiment, each slip wedge comprises a flat top surface. In another preferred embodiment, the wedge piston comprises a flat bottom surface. In yet another preferred embodiment, a wedged piston is mounted above each slip wedge. In another preferred embodiment, the invention comprises an outer elastomeric sealing member **31a** positioned to form a fluid tight seal between the wedge piston and the body and an inner elastomeric sealing member **31b** positioned to form a seal between the wedge piston and the piston member.

This first preferred embodiment of the invention is shown in the untensioned mode in Figure 1A and in the tensioned mode in Figure 1B. The wedge pistons **28** and the slip wedges **26** move downward as this embodiment of the invention is placed in the tensioned mode. As the slip wedges move downward into the conical section of the central channel, they exert a tensile or tensioning force on piston member **18**.

This preferred embodiment of the invention further comprises a first fluid flowpath **30** extending through the upper lip to a pressurization region **32** of the upper cylindrical section above the wedge piston. In one preferred embodiment, the fluid flowpath is adapted to receive hydraulic fluid. In another preferred embodiment, the fluid flowpath is adapted to receive a gas.

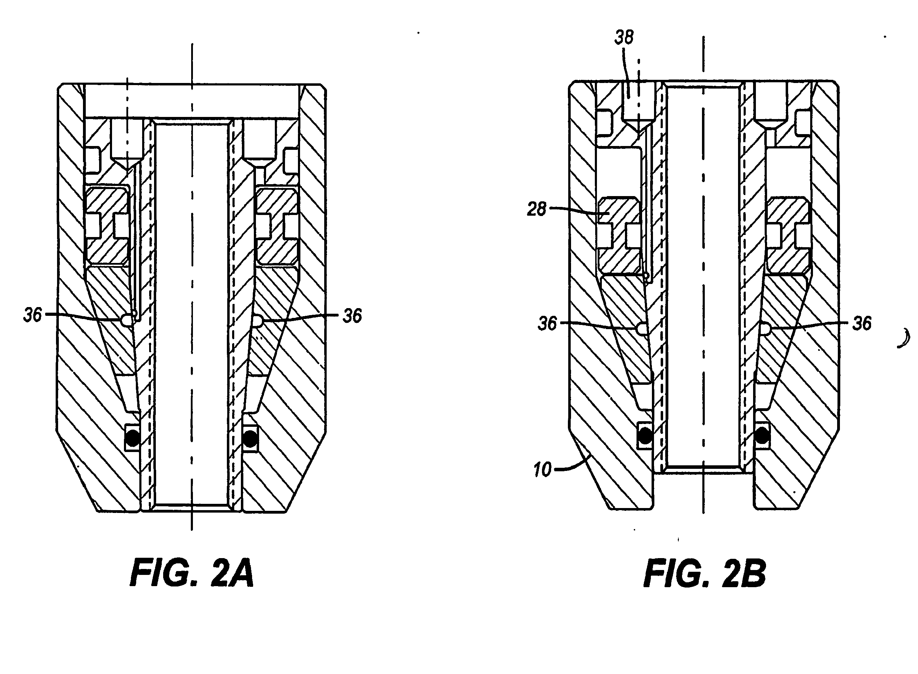

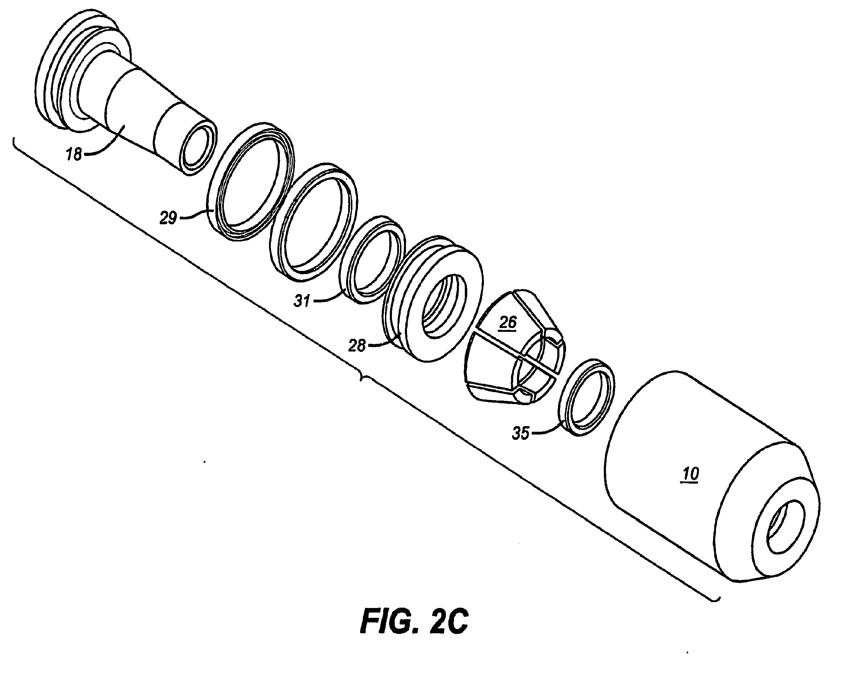

Another preferred embodiment of the present invention is depicted in Figures 2A, 2B, and 2C. This preferred embodiment comprises the body, piston member, two slip wedges, wedge piston, and first fluid flowpath, as described above. Additionally, the second preferred embodiment comprises a spring **36** inserted between each slip wedge and the piston member, and a second fluid flowpath **38** extending through the piston to a region between a slip wedge and a wedge piston. The spring facilitates detensioning of the piston member. In a preferred embodiment, the second fluid flowpath is radially opposite the first fluid flowpath.

This second preferred embodiment of the invention is shown in the untensioned mode in Figure 2A and in the tensioned mode in Figure 2B. The wedge pistons **28** and the slip wedges **26** move downward as this embodiment of the invention is placed in the tensioned mode. As the slip wedges move downward into the conical section of the central channel, they exert a tensile or tensioning force on piston member **18**.

This preferred embodiment of the invention further comprises a seal 35 located in the body below the lower conical section. This seal is positioned in a sealing relationship between the piston member and the body. In a preferred embodiment, the seal is elastomeric.

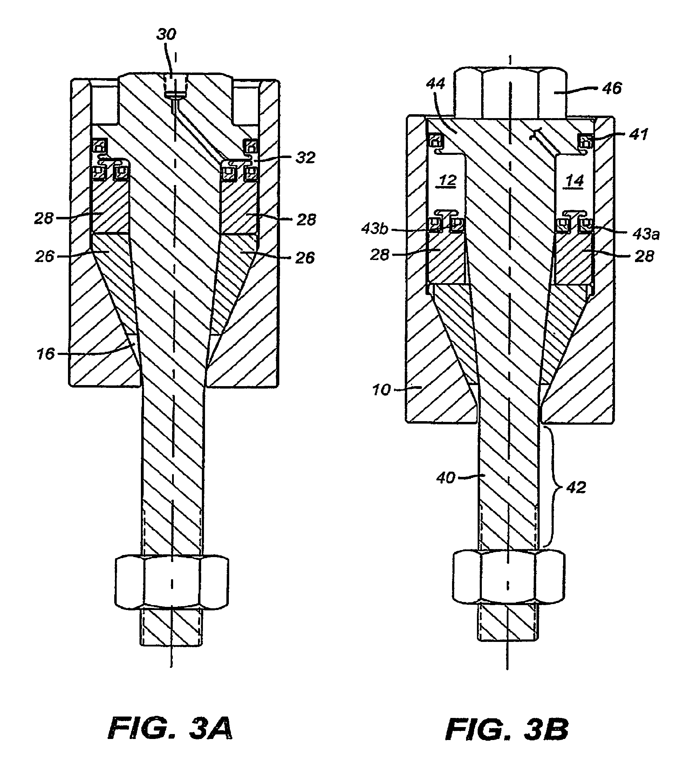

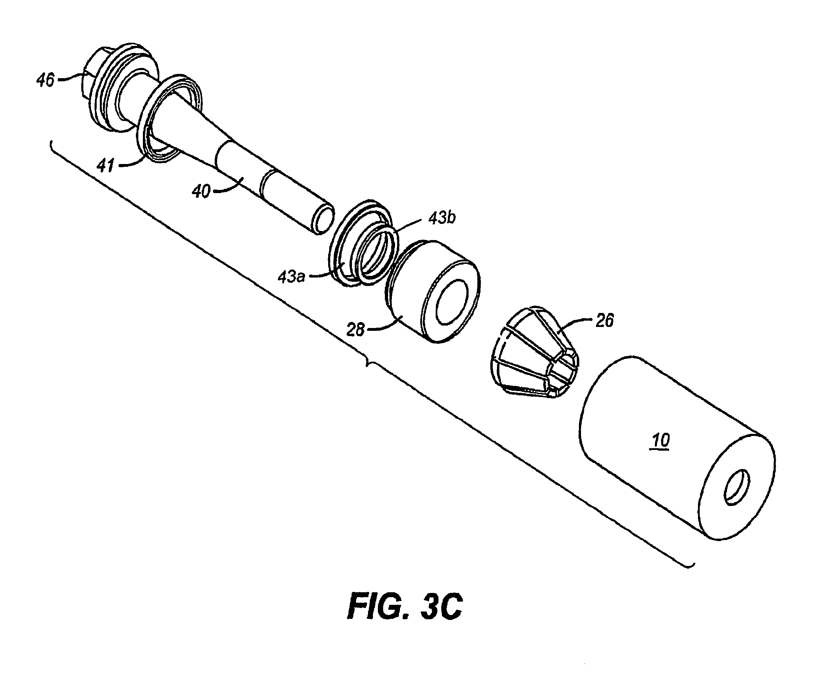

Another preferred embodiment of the present invention is depicted in Figures 3A, 3B, and 3C. This preferred embodiment comprises the body **10**, comprising a central channel **12** which, comprises an upper cylindrical section **14** and a lower conical section **16**, as described above. This preferred embodiment further comprises a stud **40** which is centrally located in the central channel. The stud comprises a longitudinal shaft **42** and a top region **44**. This preferred embodiment further comprises a nut **46** which is integral with the stud and located within the central channel.

This preferred embodiment further comprises at least two slip wedges **26** extending into the conical section of the central channel and a wedge piston **28** mounted above the slip wedges in the central channel. In a preferred embodiment, each slip wedge comprises a flat top service. In yet another preferred embodiment, the wedge piston comprises a flat bottom surface.

The invention further comprises a fluid flowpath **30** extending through the stud to a pressurized region **32** of the upper cylindrical section, above the wedge piston. In one preferred embodiment, the fluid flowpath is adapted to receive hydraulic fluid. In another preferred embodiment, the fluid flowpath is adapted to receive a gas.

This third preferred embodiment of the invention is shown in the untensioned mode in Figure 3A and in the tensioned mode in Figure 3B. The wedge pistons **28** and the slip wedges **26** move downward as this embodiment of the invention is placed in the tensioned mode. As the slip wedges move downward into the conical section of the central channel, they exert a tensile or tensioning force on stud **40.**

In another preferred embodiment, the invention further comprises an elastomeric sealing member **41** positioned to form a fluid tight seal between the stud and the body. In another preferred embodiment, the invention further comprises an outer elastomeric sealing member **43a** positioned to form a fluid tight seal between the wedge piston and the body and an inner elastomeric sealing member **43b** positioned to form a fluid tight seal between the wedge piston and the stud.

The foregoing disclosure and description of the inventions are illustrative and explanatory. Various changes in the size, shape, and materials, as well as in the details of the illustrative construction and/or an illustrative method may be made without departing from the scope of the invention.

## Claims

1. A tensioner comprising:
(a) a body (10) comprising a central channel (12) comprising an upper cylindrical section (14) and a lower conical section (16);
(b) a piston member (18) centrally located in said central channel (12) comprising a longitudinal shaft (20) and a top region (22) comprising an upper lip (24);
(c) a least two slip wedges (26) extending into the conical section (16) of the central channel (12) adjacent to the piston (18);
(d) a wedge piston mounted above the slip wedges (26) in the central channel; and
(e) a first fluid flowpath (30) extending through the upper lip (24) to a pressurization region (32) of the upper cylindrical section (14) above the wedge piston (28).

2. A hydraulic tensioner comprising:
(a) a body (10) comprising a central channel (12) comprising an upper cylindrical section (14) and a lower conical section (16);
(b) a stud (40) centrally located in said central channel (12) comprising a longitudinal shaft (47) and a top region (44);
(c) a nut (46) integral with the stud and located within the central channel (12);
(d) at least two slip wedges (26) extending into the conical section (16) of the central channel (12);
(e) a wedge piston (28) mounted above the slip wedges (26) in the central channel; and
(f) a fluid flowpath (30) extending through the stud (40) to a pressurization region (32) of the upper cylindrical section (14) above the wedge piston (28).

3. A tensioner as claimed in claim 1 or 2, wherein the fluid flowpath (30) is adapted to receive hydraulic fluid.

4. A tensioner as claimed in claim 1 or 2, wherein the fluid flowpath (30) is adapted to receive a gas.

5. A tensioner as claimed in claim 1 or 2, further comprising a wedge piston (28) mounted above each slip wedge (26).

6. A tensioner as claimed in claim 1, further comprising an elastomeric sealing member (29) positioned to form a fluid tight seal between the piston member (18) and the body (10).

7. A tensioner as claimed in claim 6, further comprising:
(a) an outer elastomeric sealing member (31a) positioned to form a fluid tight seal between the wedge piston (28) and the body (10);
and
(b) an inner elastomeric sealing member (31b) positioned to form a fluid tight seal between the wedge piston (28) and the piston member (18).

8. A tensioner as claimed in claim 2, further comprising an elastomeric sealing member (41) positioned to form a fluid tight seal between the stud (40) and the body (10).

9. A tensioner as claimed in claim 2, further comprising:
(a) an outer elastomeric sealing member (43a) positioned to form a fluid tight seal between the wedge piston (28) and the body (10);
and
(b) an inner elastomeric sealing member (43b) positioned to form a fluid tight seal between the wedge piston (28) and the stud (40).

10. A tensioner as claimed in claim 1 or 2, wherein each slip wedge (26) comprises a flat top surface.

11. A tensioner as claimed in claim 10, wherein the wedge piston (28) comprises a flat bottom surface.

12. A tensioner as claimed in claim 1, further comprising:
(a) a spring (36) inserted between each slip wedge (26) and the piston member (18);
(b) a second fluid flowpath (38) extending through the piston (18) to a region between a slip wedge (26) and a wedge piston (28) ; and
(c) a seal (35) located in the body below the lower conical section (16) positioned in a sealing relationship between the piston member (18) and the body (10).

13. A tensioner as claimed in claim 12, wherein the second fluid flowpath (38) is radially opposite the first fluid flowpath (30).

14. A tensioner as claimed in claim 12, wherein the seal (35) is elastomeric.

## Patentansprüche

1. Spanner, der Folgendes umfasst:
(a) einen Körper (10), der einen mittigen Kanal (12) mit einem oberen zylindrischen Abschnitt (14) und einem unteren konischen Abschnitt (16) umfasst;
(b) ein Kolbenelement (18), das mittig in dem mittigen Kanal (12) angeordnet ist und einen Längsschaft (20) und einen oberen Bereich (22) mit einer oberen Lippe (24) umfasst;
(c) mindestens zwei Gleitkeile (26), die sich in den konischen Abschnitt (16) des mittigen Kanals (12) angrenzend an den Kolben (18) erstrecken;
(d) einen Keilkolben, der über den Gleitkeilen (26) in dem mittigen Kanal angebracht ist; und
(e) einen ersten Fluiddurchlauf (30), der sich durch die obere Lippe (24) zu einem Druckbeaufschlagungsbereich (32) des oberen zylindrischen Abschnitts (14) über dem Keilkolben (28) erstreckt.

2. Hydraulikspanner, der Folgendes umfasst:
(a) einen Körper (10), der einen mittigen Kanal (12) mit einem oberen zylindrischen Abschnitt (14) und einem unteren konischen Abschnitt (16) umfasst;
(b) einen Bolzen (40), der mittig in dem mittigen Kanal (12) angeordnet ist und einen Längsschaft (47) und einen oberen Bereich (44) umfasst;
(c) eine Mutter (46), die mit dem Bolzen integriert ist und innerhalb des mittigen Kanals (12) angeordnet ist;
(d) mindestens zwei Gleitkeile (26) die sich in den konischen Abschnitt (16) des mittigen Kanals (12) erstrecken;
(e) einen Keilkolben (28), der über den Gleitkeilen (26) in dem mittigen Kanal angebracht ist; und
(f) einen Fluiddurchlauf (30), der sich durch den Bolzen (40) zu einem Druckbeaufschlagungsbereich (32) des oberen zylindrischen Abschnitts (14) über dem Keilbereich (28) erstreckt.

3. Spanner nach Anspruch 1 oder 2, bei dem der Fluiddurchlauf (30) zum Aufnehmen von Hydraulikfluid eingerichtet ist.

4. Spanner nach Anspruch 1 oder 2, bei dem der Fluiddurchlauf (30) zum Aufnehmen eines Gases eingerichtet ist.

5. Spanner nach Anspruch 1 oder 2, der weiter einen Keilkolben (28) angebracht über jedem Gleitkeil (26) umfasst.

6. Spanner nach Anspruch 1, der weiter ein elastomeres Dichtungselement (29) umfasst, das zum Bilden einer fluidundurchlässigen Dichtung zwischen dem Kolbenelement (18) und dem Körper (10) positioniert ist.

7. Spanner nach Anspruch 6, der weiter Folgendes umfasst:
(a) ein äußeres elastomeres Dichtungselement (31a), das zum Bilden einer fluidundurchlässigen Dichtung zwischen dem Keilkolben (28) und dem Körper (10) positioniert ist; und
(b) ein inneres elastomeres Dichtungselement (31b), das zum Bilden einer fluidundurchlässigen Dichtung zwischen dem Keilkolben (28) und dem Kolbenelement (18) positioniert ist.

8. Spanner nach Anspruch 2, der weiter ein elastomeres Dichtungselement (41) umfasst, welches zum Bilden einer fluidundurchlässigen Dichtung zwischen dem Bolzen (40) und dem Körper (10) positioniert ist.

9. Spanner nach Anspruch 2. der weiter Folgendes umfasst:
(a) ein äußeres elastomeres Dichtungselement (43a), das zum Bilden einer fluidundurchlässigen Dichtung zwischen dem Keilkolben (28) und dem Körper (10) positioniert ist: und
(b) ein inneres elastomeres Dichtungselement (43b), das zum Bilden einer fluidundurchlässigen Dichtung zwischen dem Keilkolben (28) und dem Bolzen (40) positioniert ist.

10. Spanner nach Anspruch 1 oder 2, bei dem jeder Gleitkeil (26) eine flache Oberseite aufweist.

11. Spanner nach Anspruch 10, bei dem der Keilkolben (28) eine flache Unterseite aufweist.

12. Spanner nach Anspruch 1, der weiter Folgendes umfasst:
(a) eine Feder (36), die zwischen jedem Gleitkeil (26) und dem Kolbenelement (18) eingesetzt ist;
(b) einen zweiten Durchlauf (38), der sich durch den Kolben (18) zu einem Bereich zwischen einem Gleitkeil (26) und einem Keilkolben (28) erstreckt; und
(c) eine Dichtung (35), die in dem Körper unter dem unteren konischen Abschnitt (16) angeordnet und in einem abdichtenden Verhältnis zwischen dem Kolbenelement (18) und dem Körper (10) positioniert ist.

13. Spanner nach Anspruch 12, bei dem der zweite Fluiddurchlauf (38) dem ersten Fluiddurchlauf (30) radial gegenüberliegt.

14. Spanner nach Anspruch 12, bei dem die Dichtung (35) elastomerisch ist.

## Revendications

1. Tendeur comportant :
(a) un corps (10) comportant un profilé en U central (12) comportant une section cylindrique supérieure (14) et une section conique inférieure (16) ;
(b) un élément de type piston (18) situé centralement dans ledit profilé en U central (12) comportant un arbre longitudinal (20) et une région supérieure (22) comportant une lèvre supérieure (24) ;
(c) au moins deux cales coulissantes (26) s'étendant dans la section conique (16) du profilé en U central (12) se trouvant de manière adjacente par rapport au piston (18) ;
(d) un piston à cale monté au-dessus des cales coulissantes (26) dans le profilé en U central ; et
(e) un premier chemin d'écoulement de fluide (30) s'étendant au travers de la lèvre supérieure (24) jusqu'à une région de pressurisation (32) de la section cylindrique supérieure (14) au-dessus du piston à cale (28).

2. Tendeur hydraulique comportant :
(a) un corps (10) comportant un profilé en U central (12) comportant une section cylindrique supérieure (14) et une section conique inférieure (16) ;
(b) un goujon (40) situé centralement dans ledit profilé en U central (12) comportant un arbre longitudinal (47) et une région supérieure (44) ;
(c) un écrou (46) faisant partie intégrante du goujon et situé à l'intérieur du profilé en U central (12) ;
(d) au moins deux cales coulissantes (26) s'étendant dans la section conique (16) du profilé en U central (12) ;
(e) un piston à cale (28) monté au-dessus des cales coulissantes (26) dans le profilé en U central ; et
(f) un chemin d'écoulement de fluide (30) s'étendant au travers du goujon (40) jusqu'à une région de pressurisation (32) de la section cylindrique supérieure (14) au-dessus du piston à cale (28).

3. Tendeur selon la revendication 1 ou la revendication 2, dans lequel le chemin d'écoulement de fluide (30) est adapté pour recevoir un fluide hydraulique.

4. Tendeur selon la revendication 1 ou la revendication 2, dans lequel le chemin d'écoulement de fluide (30) est adapté pour recevoir un gaz.

5. Tendeur selon la revendication 1 ou la revendication 2, comportant par ailleurs un piston à cale (28) monté au-dessus de chaque cale coulissante (26).

6. Tendeur selon la revendication 1, comportant par ailleurs un élément d'étanchéité élastomère (29) positionné pour former un joint étanche au fluide entre l'élément de type piston (18) et le corps (10).

7. Tendeur selon la revendication 6, comportant par ailleurs :
(a) un élément d'étanchéité élastomère extérieur (31a) positionné pour former un joint étanche au fluide entre le piston à cale (28) et le corps (10) ; et
(b) un élément d'étanchéité élastomère intérieur (31 b) positionné pour former un joint étanche au fluide entre le piston à cale (28) et l'élément de type piston (18).

8. Tendeur selon la revendication 2, comportant par ailleurs un élément d'étanchéité élastomère (41) positionné pour former un joint étanche au fluide entre le goujon (40) et le corps (10).

9. Tendeur selon la revendication 2, comportant par ailleurs :
(a) un élément d'étanchéité élastomère extérieur (43a) positionné pour former un joint étanche au fluide entre le piston à cale (28) et le corps (10) ; et
(b) un élément d'étanchéité élastomère intérieur (43b) positionné pour former un joint étanche au fluide entre le piston à cale (28) et le goujon (40).

10. Tendeur selon la revendication 1 ou la revendication 2, dans lequel chaque cale coulissante (26) comporte une surface supérieure plate.

11. Tendeur selon la revendication 10, dans lequel le piston à cale (28) comporte une surface inférieure plate.

12. Tendeur selon la revendication 1, comportant par ailleurs :
(a) un ressort (36) inséré entre chaque cale coulissante (26) et l'élément de type piston (18) ;
(b) un second chemin d'écoulement de fluide (38) s'étendant au travers du piston (18) jusqu'à une région entre une cale coulissante (26) et un piston à cale (28) ; et
(c) un joint d'étanchéité (35) situé dans le corps en dessous de la section conique inférieure (16) positionné en une relation d'étanchéité entre l'élément de type piston (18) et le corps (10).

13. Tendeur selon la revendication 12, dans lequel le second chemin d'écoulement de fluide (38) est radialement opposé au premier chemin d'écoulement de fluide (30).

14. Tendeur selon la revendication 12, dans lequel le joint d'étanchéité (35) est élastomère.
